(19) Europäisches Patentamt
European Patent Office
Office européen des brevets

(11) **EP 3 494 621 B1**

(12) **EUROPÄISCHE PATENTSCHRIFT**

(45) Veröffentlichungstag und Bekanntmachung des Hinweises auf die Patenterteilung:
**13.09.2023   Patentblatt 2023/37**

(21) Anmeldenummer: **17754603.3**

(22) Anmeldetag: **26.07.2017**

(51) Internationale Patentklassifikation (IPC):
**H02G 3/08** *(2006.01)*

(52) Gemeinsame Patentklassifikation (CPC):
**H02G 3/22; H02G 3/081; H02G 3/088; H02G 15/007; H02G 15/013**

(86) Internationale Anmeldenummer:
**PCT/DE2017/100626**

(87) Internationale Veröffentlichungsnummer:
**WO 2018/024286 (08.02.2018 Gazette 2018/06)**

(54) **VORRICHTUNG UND VERFAHREN ZUR KABELDURCHFÜHRUNG DURCH EINEN WANDDURCHBRUCH**

DEVICE AND METHOD FOR LEADING CABLES THROUGH A WALL OPENING

DISPOSITIF ET PROCÉDÉ DE PASSAGE DE CÂBLES À TRAVERS UNE OUVERTURE DE MUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2016   DE 102016114577**

(43) Veröffentlichungstag der Anmeldung:
**12.06.2019   Patentblatt 2019/24**

(73) Patentinhaber: **Harting Electric GmbH & Co. KG 32339 Espelkamp (DE)**

(72) Erfinder: **FERDERER, Albert 32339 Espelkamp (DE)**

(56) Entgegenhaltungen:
WO-A2-2012/017000      DE-A1-102013 007 909
DE-A1-102014 215 058      DE-A1-102014 215 058
DE-B3-102011 103 351      DE-U1-202010 008 423
DE-U1-202012 101 639      JP-A- 2013 005 636
US-A1- 2014 252 722      US-A1- 2016 033 722

## Beschreibung

Die Erfindung geht aus von einer Vorrichtung zur Kabeldurchführung durch einen Wanddurchbruch nach dem Oberbegriff des unabhängigen Anspruchs 1.

Die Erfindung geht weiterhin aus von einem Verfahren zur Kabeldurchführung durch einen Wanddurchbruch mittels einer Vorrichtung nach Anspruch 1.

Derartige Vorrichtungen und Verfahren zur Kabeldurchführung durch einen Wanddurchbruch werden benötigt, um Kabel, insbesondere konfektionierte Patchkabel, an die also bereits Stecker angebaut, insbesondere angelötet sind, in den Schaltschrank hinein oder aus ihm herauszuführen.

## Stand der Technik

Die Druckschrift DE 10 2014 215 058 A1 offenbart eine Anschlussvorrichtung zum Anschließen elektrischer Leitungen und Verfahren zur Montage einer Anschlussvorrichtung. Die Anschlussvorrichtung besitzt einen Grundkörper, der zur Aufnahme wenigstens eines Endabschnitts einer elektrischen Leitung geeignet ist. Weiterhin besitzt sie eine erste Öffnung, durch welche der Endabschnitt der Leitung hindurchführbar ist. Dabei kann ein Wandungskörper, durch den wenigstens ein elektrisches Verbindungselement ragt, in wenigstens zwei unterschiedlichen Positionen an dem Grundkörper angeordnet werden, wobei sich diese Positionen durch eine Relativposition der Öffnung gegenüber dem Verbindungselement voneinander unterscheiden. Weiterhin wird der Einsatz von kombinierten Zugentlastungs-/Dichtmitteln sowie der Einsatz einer Dichtung in Form einer Flachdichtung oder eines O-Rings im Gehäusedeckel offenbart.

Die Druckschrift US 2016/0033722 A1 offenbart eine Halterung zur Sicherung mehrerer Glasfaserkabel an einem Anschlusskasten.

Die Druckschrift DE 10 2013 007 909 A1 offenbart ein Gehäuse für eine elektrische Baueinheit sowie ein Verfahren zu seiner Montage. Es ist eine Kabeldurchführung an der Wandung des Gehäuses vorgesehen, aufweisend eine Hülse, durch welche das Kabel durchgeführt ist. Es ist ein vorgespanntes und/oder elastisches Dichtelement vorgesehen, welches einen Längsabschnitt der Hülse und einen sich daran anschließenden Längsabschnitt des auf der Innenseite angeordneten Kabels dicht umspannt.

Die Druckschrift WO 2012/017000 A2 offenbart eine Beleuchtungsvorrichtung mit einem Dichtelement, mit einem mindestens eine Leitung führenden und mit einer Ummantelung versehenen Kabel, das über ein Dichtelement gegenüber einer Kabeldurchführung des Gehäuses abgedichtet angeordnet ist. Das Dichtelement ist an der Ummantelung des Kabels angeformt. Die Kabeldurchführung und/oder das Dichtelement sind derart ausgebildet, dass das Dichtelement von einer kabelendennahen Seite der Kabeldurchführung her in Dichtstellung bringbar ist, in der das Dichtelement dichtend an einem Rand der Kabeldurchführung anliegt.

Im Stand der Technik sind weiterhin Kabeleinführungen für Schaltschränke beispielsweise aus dem Wikipedia-Artikel https://de.wikipedia.org/wiki/Kabeleinführung bekannt.

Darin wird unter anderem deren Einsatz in Schaltschränken erwähnt, und insbesondere deren Einsatz für die Einführung von Leitungen, an welche bereits Stecker angelötet sind (konfektionierte Leitungen/ Patchkabel). Dabei werden insbesondere teilbare Kabeleinführungen beschrieben, bei denen mehrere verschiedene, in der Regel rechteckige, geschlitzte Dichtelemente seitlich auf die dazugehörigen Leitungen geschoben und dann gemeinsam durch einen Rahmen zusammengepresst werden. Dadurch werden die Dichtelemente zusammen mit den Kabeln im Rahmen fixiert und die Kabel werden durch die Dichtelemente zugentlastet. Die Teilbarkeit dieser Systeme bringt zwei große Vorteile mit sich. Zum einen entfällt das Ab- und wieder Anlöten der Stecker an die Leitungen, wodurch die Herstellergarantie der Leitung erhalten bleibt. Zum anderen kann die Montage auch nachträglich erfolgen, da die Kabeleinführung um die bestehenden Leitungen herum montiert wird. Diese geteilten Kabeleinführungssysteme bestehen in den meisten Fällen aus einem Hartrahmen aus Kunststoff oder seltener aus Aluminium (z. B. für die Lebensmittelindustrie) und einem oder mehreren geschlitzten Dichtelementen, die meist aus Elastomer bestehen.

Ein Nachteil bei dieser Anordnung besteht darin, dass diese Zugentlastung durch das jeweilige Dichtungselement für viele Anwendungen nicht ausreichend ist.

Die Stabilität der Zugentlastung wird verbessert durch ein im Stand der Technik bekanntes, von der Firma Wieland stammendes Steckverbindergehäuse, bestehend aus einem Einbaugehäuse und ein damit steckbares und über einen Verriegelungsbügel verriegelbares Tüllengehäuse, ausgeführt als Halbschalengehäuse, also bestehend aus zwei Gehäusehalbschalen, mit mehreren Kabeleingängen und dazugehörigen, zu den jeweils einzufügenden Kabeln passenden Dichtungen. Eine der beiden Gehäusehalbschalen weist im Verbindungsbereich eine Verbindungswand auf, an der für jedes Kabel/ jeden Kabeleingang eine Zugentlastungsschelle angebracht ist, und die an jeder Zugschelle vorteilhafterweise eine abgerundete Ausnehmung besitzt. Die andere der beiden Gehäusehalbschalen ist im Verbindungsbereich offen, so dass der Querschnitt des Kabels dadurch nicht begrenzt ist.

Nachteilig bei diesem Stand der Technik ist jedoch, dass sich die Handhabung bei dem Einstellen der Länge der Kabel innerhalb des Schaltschranks äußerst schwierig gestaltet, da das Halbschalengehäuse zumindest vom Anbaugehäuse entriegelt und getrennt werden muss, um die Schraubschellen zu lösen, das Kabel auf die richtige Länge einzustellen und wieder an den Schellen zu verschrauben. Weiterhin müssen dabei sogar die beiden Gehäusehalbschalen voneinander getrennt werden. Dieses Verfahren ist daher sehr aufwendig, äußerst unintuitiv und wird insbesondere dadurch behindert, dass der entriegelte Steckverbinder bei der Montage automatisch eine größere Entfernung zum Schaltschrank besitzt als im eingebauten Zustand, dass sich also die ideale Kabellänge für viele Anwendungen gar nicht richtig einstellen lässt. Eine zu große Kabellänge der Kabel innerhalb des Schaltschranks und entsprechende Spannungen und Querkräfte der Kabel auf die Kontakte/ Kabelanschlüsse der Bauelemente innerhalb des Schaltschranks sowie deren vorzeitiger Verschleiß sind die Folge.

Die Druckschrift DE 20 2012 101 639 U1 zeigt ein aufklappbares, zweiteiliges Durchführungsgehäuse, bei welchem die Zugentlastung direkt am Einführbereich angeordnet ist. Diese Anordnung besitzt den Nachteil, dass beim Zusammenklappen der beiden Gehäuseteile eine Positionsänderung der Zugentlastung relativ zum Kabelauslassbereich, z.B. zum Schaltschrank, stattfindet, wodurch eine Änderung der Kabellänge innerhalb des Schaltschranks verursacht wird. Die vorgenannte Problematik wird dadurch gemildert aber nicht vollständig gelöst.

Die Druckschrift JP 2013 005 636 A offenbart eine Kabeldurchführung mit einem Gehäuse und einem Deckel, der dazu dient, eine Öffnung des Gehäuses zu verschließen. Dabei kann der Deckel ein Dichtungselement aus einem gummiähnlichen Material, durch welches das Kabel geführt ist, komprimieren.

Die Druckschrift DE 10 2011 103 351 B3 zeigt ein Anschlussgerät mit einem Dichtelement.

Die Druckschrift US 2014/252722 A1 offenbart ein Dichtkonzept mit einer elastischen Kabeldurchführung und einem flachen Dichtungselement.

Die Druckschrift DE 20 2010 008 423 U1 offenbart ein elektrisches Gerät mit einer Zugentlastungsvorrichtung, welche im Inneren des Gehäuses angeordnet ist.

Ein weiterer Nachteil im Stand der Technik besteht darin, dass derart geteilte Gehäusen grundsätzlich eine geringe Dichtigkeit aufweisen.

## Aufgabenstellung

Die Aufgabe der Erfindung besteht darin, die vorgenannten Probleme zu lösen und eine Vorrichtung und ein Verfahren anzugeben, die dazu geeignet sind, die Handhabung eingeführter Patchkabel im Schaltschrank zu vereinfachen. Außerdem soll die Vorrichtung besonders gut gegen Feuchtigkeit und Schmutz abgedichtet sein.

Diese Aufgabe wird durch die Kennzeichen der unabhängigen Ansprüche gelöst.

Die Vorrichtung zur Kabeldurchführung durch einen Wanddurchbruch eines Schaltschranks umfasst die technische Merkmale gemäß Anspruch 1.

Das Verfahren zur Kabeldurchführung durch einen Wanddurchbruch mittels einer solchen Vorrichtung umfasst die Schritte gemäß Anspruch 9.

Vorteilhafte Ausgestaltungen der Erfindung sind in den Unteransprüchen angegeben.

Die Erfindung hat den Vorteil, dass insbesondere auch Patchkabel, also Kabel, die sich dadurch auszeichnen, dass sie beidseitig bereits mit Steckverbindern versehen sind, in einen Schaltschrank eingebracht und auf eine intuitive und komfortable Weise innerhalb des Schaltschranks auf die ideale Länge gebracht werden können, so dass entsprechende Spannungen und Querkräfte der Kabel auf die Kontakte/ Kabelanschlüsse der Bauelemente innerhalb des Schaltschranks vermieden oder zumindest erheblich verringert werden können.

Die Erfindung hat weiterhin den Vorteil, dass bei der Herstellung erhebliche Kosten gespart werden. Schließlich kann auf eine Verriegelungseinrichtung komplett verzichtet werden. Dennoch gestaltet sich die Montage der Zugentlastung durch das wesentlich kostengünstigere Fenster deutlich komfortabler als bei einem mehrteiligen, dem Stand der Technik entsprechenden System. Insbesondere findet die Betätigung der Zugentlastung in ihrer endgültigen Position statt, was die Längenabmessung des im Schaltschrank befindlichen Teils des Kabels besonders intuitiv gestaltet.

In einer bevorzugten Ausgestaltung kann die mindestens eine Kabeleinführöffnung mit dem Montagefenster verbunden sein, und so einen an das Montagefenster grenzenden Einführbereich aufweisen, in den das Dichtungselement aus Richtung des Montagefensters eingeschoben werden kann. Dazu ist es besonders vorteilhaft, wenn die Kabeleinführöffnung zumindest an ihrem Einführbereich zwei zueinander parallele Kanten aufweist und das Dichtungselement form- und kraftschlüssig in die Kabeleinführöffnung einfügbar ist und zumindest an einem Endbereich zwei parallele Kanten sowie eine rechtwinklig damit abschließende Begrenzungsfläche aufweist, die im eingeschobenen Zustand mit den parallelen Kanten der Kabeleinführöffnung in mechanischem Kontakt stehen. Dadurch ist das Dichtungselement seitlich in die Kabeleinführöffnung einschiebbar und in dieser Richtung auch geringfügig komprimierbar

Insbesondere kann die Kabeleinführöffnung an ihrem Rand eine, insbesondere um 180° umlaufende, Nut aufweisen und das Dichtungselement kann einen dazu passenden Kragen aufweisen, der formschlüssig in die Nut einfügbar ist. Dadurch wird das Dichtungselement beim seitlichen Einschieben in der Kabeleinführöffnung geführt, was die Handhabung erheblich vereinfacht.

Um mit dem Kabel gemeinsam in die Kabeleinführöffnung eingeschoben zu werden, ist es vorteilhaft, wenn das Dichtungselement eine Durchgangsöffnung zur Aufnahme des Kabels und weiterhin einen seitlichen Schlitz zum Einfügen des Kabels in die Durchgangsöffnung aufweist, so dass das Dichtungselement zusammen mit dem darin eingefügten Patchkabel in die Kabeleinführöffnung einfügbar ist. Insbesondere ist es vorteilhaft, wenn die Länge des Dichtungselements die Länge der Kabeleinführöffnung des Gehäuses geringfügig überschreitet, weil dadurch das eingefügte Dichtungselement geringfügig über das offene Fenster hinausragt und durch Verschließen des Fensters mittels des Deckels komprimierbar ist, um im verschlossenen Zustand gegenüber dem Gehäuse und gegenüber dem Kabel eine Spannung aufzubauen, um so eine gegenüber dem unverschlossenen Zustand erhöhte Dichtigkeit zu erreichen. Unter dem Kennzeichen, dass "die Länge des Dichtungselements die Länge der Kabeleinführöffnung des Gehäuses geringfügig überschreitet" kann beispielsweise verstanden werden, dass die Länge des Dichtungselements die Länge der Kabeleinführöffnung des Gehäuses um eine Länge X überschreitet, wobei X insbesondere die folgenden Werte annehmen kann:

$$0{,}1mm < X < 4mm,$$

insbesondere 0,1 mm < X < 2mm,
bevorzugt 0,2 mm < X < 1 mm,
besonders bevorzugt 0,3 mm < X < 0,6 mm.

Beispielsweise steht das Dichtungselement im eingeschobenen Zustand also um diesen Wert X über das offene Fenster hinaus. Durch ein Verschließen des Fensters, insbesondere mittels des Deckels, wird das Dichtungselement geringfügig komprimiert und sorgt so gegenüber dem Kabel einerseits und dem Gehäuse anderseits für eine besonders gute Abdichtung.

Der Befestigungsbereich kann einen Flansch, insbesondere mit Durchgangsbohrungen, umfassen, mit dem das Gehäuse an der Wand des Schaltschranks befestigt, insbesondere angeschraubt, werden kann. Dazu ist es besonders vorteilhaft, wenn der Wanddurchbruch/ Blechausschnitt der Öffnung eines Standard-Rechtecksteckverbinders entspricht.

Das mindestens eine Zugentlastungselement besitzt mindestens eine Schraube, durch die das Kabel mittels eines durch das Montagefenster geführten Schraubendrehers an dem Tüllengehäuse fixierbar ist. Insbesondere kann es sich bei dem Zugentlastungselement um eine Schraubschelle mit zwei Schrauben handeln, mit denen das Kabel an die Innenseite des Gehäuses geschraubt wird.

**Ausführungsbeispiel**

Ein Ausführungsbeispiel der Erfindung ist in den Zeichnungen dargestellt und wird im Folgenden näher erläutert. Es zeigen:

Fig. 1    Ein dem Stand der Technik entsprechendes System, gebildet aus mehreren konventionellen Steckverbindergehäusebauteilen;

Fig. 2    ein einteiliges Gehäuse mit einem Montagefenster;

Fig. 3    ein Dichtungselement;

Fig. 4    einen Deckel für das Montagefenster;

Fig. 5    das Gehäuse im Schnitt mit Schraubschellen und Dichtungselementen, sowie einer Flanschgummi-Dichtung.

Die Figuren enthalten teilweise vereinfachte, schematische Darstellungen. Zum Teil werden für gleiche, aber gegebenenfalls nicht identische Elemente identische Bezugzeichen verwendet. Verschiedene Ansichten gleicher Elemente könnten unterschiedlich skaliert sein.

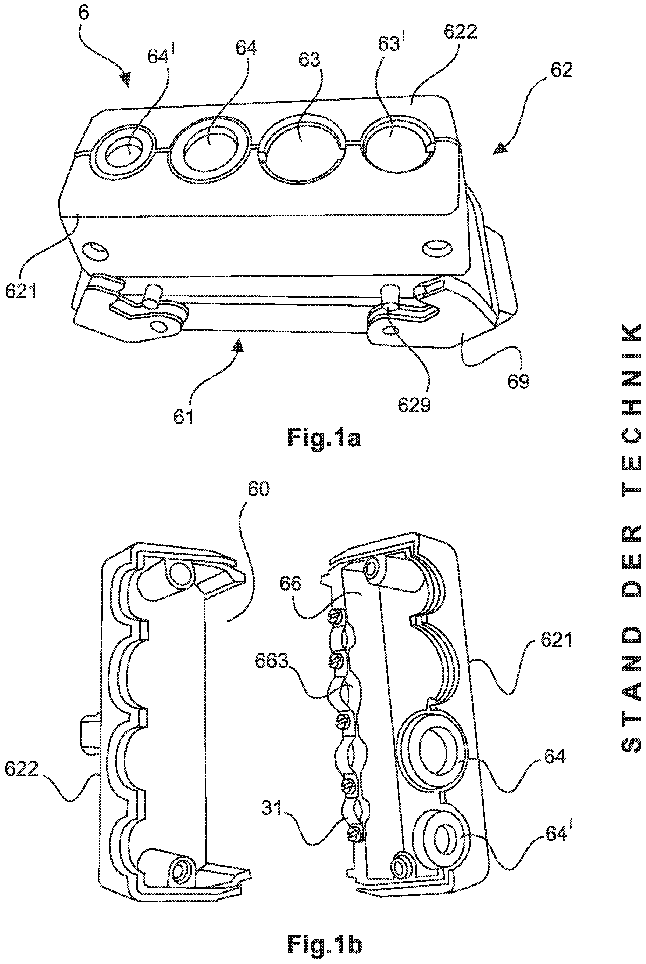

Die Fig. 1 zeigt ein dem Stand der Technik entsprechendes System 6, das aus mehreren Komponenten besteht, die aus dem Bereich der Steckverbindergehäuse stammen.

Das System 6 besteht aus einem typischen Anbaugehäuse 61 und ein damit steckbares und an seinen Verriegelungszapfen 629 mittels eines Verriegelungsbügels 69 verriegelbares Tüllengehäuse 62. Das Anbaugehäuse 61 ist dafür vorgesehen, an einer Wand z.B. eines Schaltschranks im Bereich eines darin angeordneten Wanddurchbruchs befestigt zu werden. Das Tüllengehäuse 62 ist in Form eines Halbschalengehäuses ausgeführt, besteht also aus zwei Gehäusehalbschalen 621, 622 mit mehreren Kabeleingängen 63, 63' und dazugehörigen, zu den jeweils einzufügenden Kabeln und Kabeleingängen 63, 63' passenden Dichtelementen 64, 64'. Eine der beiden Gehäusehalbschalen 621 weist in ihrem Verbindungsbereich zum Anbaugehäuse 61 eine Verbindungswand 66 auf, an der für jedes Kabel/ jeden Kabeleingang zur Zugentlastung eine Schraubschelle 31 angebracht ist. Somit kann ein Kabel mit einem Dichtelement 64, 64' versehen werden, indem das Kabel das Dichtelement 64, 64' durchstößt. Dann kann das Kabel zusammen mit dem Dichtelement 64, 64' zu seiner Abdichtung in einen passenden Kabeleingang 63, 63' eingeführt werden. Durch Zusammenschrauben der beiden Gehäusehalbschalen 621, 622 werden die Dichtelemente 64, 64' im Tüllengehäuse 62 fixiert und dichten so das jeweilige Kabel gegen das Tüllengehäuse 62 ab. In seinem weiteren Verlauf kann das Kabel zur Zugentlastung mittels einer Schraubschelle 31 gegen die Verbindungswand geschraubt werden. An dieser Stelle besitzt die Verbindungswand idealerweise eine abgerundete Ausnehmung 663 zur teilweisen Aufnahme des Kabels. Die andere Halbschale 622 besitzt der Verbindungswand 66 gegenüberliegend im Verbindungsbereich eine Verbindungsöffnung 60, so dass auch Kabel mit großem Querschnitt auf die beschriebene Weise in das System 6 und dadurch in den Schaltschrank eingefügt werden können.

Es ist leicht zu erkennen, dass die Verkabelung mit einigem Montageaufwand verbunden ist, da die Gehäusehalbschalen 621, 622 dazu voneinander getrennt werden müssen. Weiterhin kann die Betätigung, d. h. in diesem Fall die Verschraubung der Zugentlastung nur im entriegelten Zustand stattfinden. Dadurch weicht der Abstand zwischen der Zugentlastung des jeweiligen Patchkabels und seinem Anschlusspunkt im Schaltschrank im Montagezustand deutlich ab von dem entsprechenden Abstand im Betriebszustand. Eine dadurch entstehende zu große Kabellänge innerhalb des Schaltschranks führt so zu Spannungen und Querkräften der Patchkabel auf Kontakte und/oder Kabelanschlüsse der angeschlossenen Bauelemente innerhalb des Schaltschranks, was sich ungünstig auf deren Lebensdauer auswirken kann. Auch wird die Verkabelung dadurch unübersichtlich und nimmt im Schaltschrank unnötig viel wertvollen Raum ein.

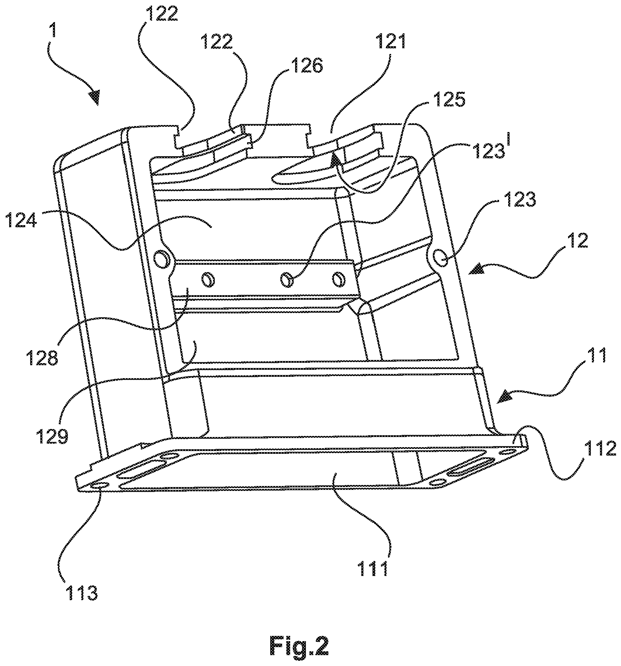

Die Fig. 2 zeigt im Gegensatz dazu ein erfindungsgemäßes einteiliges Gehäuse 1. Dieses Gehäuse 1 besitzt einen Befestigungsbereich 11 und einen Tüllenbereich 12. Der Befestigungsbereich 11 besitzt einen Flansch 112 mit Durchgangsbohrungen 113 sowie eine Öffnung 111 zur Befestigung des Gehäuses 1 an der Wand des Schaltschranks im Bereich dessen Wanddurchbruchs, auf welchem die Öffnung 111 des Gehäuses 1 angeordnet ist.

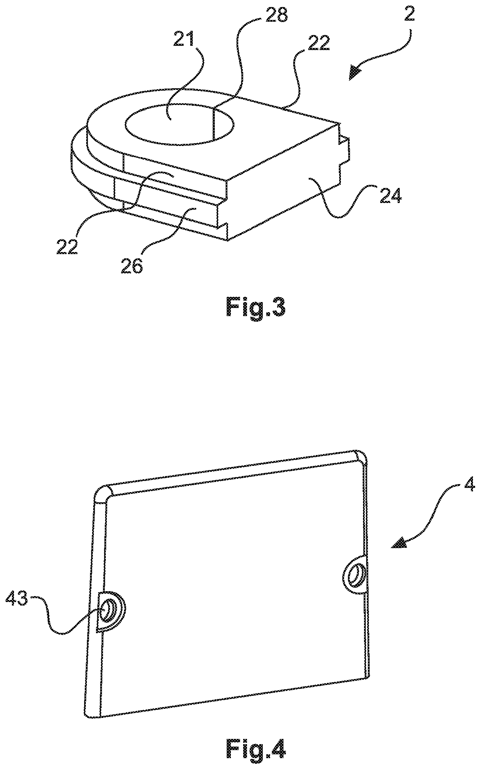

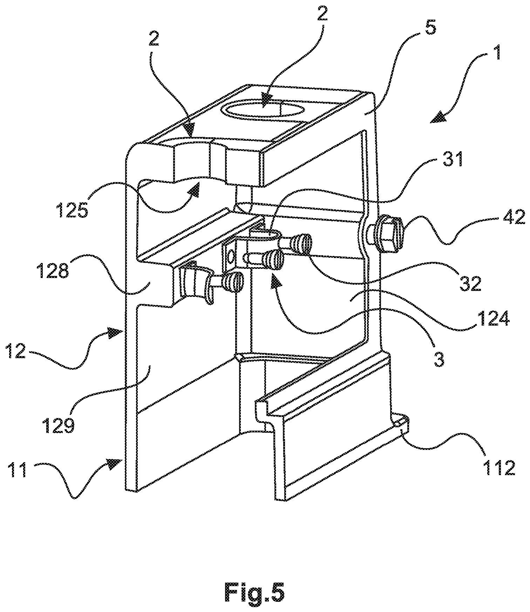

Der Tüllenbereich 12 besitzt in dieser Ausführung zwei Kabeleingangsöffnungen 125, obwohl auch eine andere Anzahl denkbar ist. Das Gehäuse 1 besitzt weiterhin an einer Innenseite einen Befestigungssteg 128 mit Gewindebohrungen 123' zum Anschrauben von Zugentlastungselementen 3, die in der Fig. 5 dargestellt sind, und die aus mit Schrauben 32 versehenen Schraubschellen 31 bestehen. Gegenüberliegend weist das Gehäuse 1 ein Montagefenster 124 auf. Die Kabeleinführöffnungen 125 sind, anders als in der vorangegangenen Darstellung, keinesfalls vollständig kreisrund ausgeführt, sondern weisen jeweils an einem an das Montagefenster 124 grenzenden Einführbereich 121 zwei zueinander parallele Kanten 122 auf, um das seitliche Einschieben der in der folgenden Fig. 3 dargestellten Dichtungselementen 2 zu erleichtern. Über diese parallele Kanten 122 sind die Kabeleinführungen 125 also mit dem Montagefenster 124 verbunden. In ihrem gesamten Rand besitzt die Kabeleinführöffnung 125 eine Nut 126.

Die Fig. 3 zeigt ein Dichtungselement 2. Das Dichtungselement 2 besitzt eine Durchgangsöffnung 21 zur Aufnahme des in den Schaltschrank einzuführenden Kabels. Weiterhin besitzt das Dichtungselement 2 einen seitlichen Schlitz 28 zum Einfügen des Kabels in die Durchgangsöffnung 21 des Dichtungselements 2. Außerdem besitzt das Dichtungselement 2 an seinem komplementär zur Kabeleinführöffnung 125 ausgebildeten Außenrand einen um 180° umlaufenden Kragen 26, der formschlüssig in die Nut 126 der Kabeleinführöffnung 125 einfügbar ist. An einem Endbereich besitzt das Dichtungselement 2 zwei zueinander parallele Seitenflächen 22, an denen ebenfalls der Kragen 26 angeformt ist, sowie eine rechtwinklig damit abschließende Begrenzungsfläche 24, an der kein Kragen ausgebildet ist.

Somit ist das Dichtungselement 2 zusammen mit dem in seine Durchgangsöffnung 21 eingefügten Kabel in die Kabelöffnung 125 des Gehäuses 1 einfügbar, nämlich aus Richtung des Montagefensters 124 einschiebbar.

Dabei kann die Länge des Dichtungselements 2 die Länge der Kabeleinführöffnung 125 des Gehäuses 1 geringfügig überschreiten, so dass die Begrenzungsfläche 24 auch im vollständig eingeschobenen Zustand geringfügig aus der Kabeleinführöffnung herausragt, wodurch das eingefügte Dichtungselement 2 durch Verschließen des Fensters, z. B. durch Verschrauben des in der nächsten Fig. 4 dargestellten Deckels 4, durch Druck auf die Begrenzungsfläche 24 komprimierbar ist, um im verschlossenen Zustand des Fensters gegenüber dem Gehäuse 1 und gegenüber dem Kabel eine erhöhte Dichtigkeit zu erreichen.

Der in der Fig. 4 dargestellte Deckel 4 besitzt dazu zwei Schraubbohrungen 43, mit denen er an den Gewindebohrungen 123 des Gehäuses 1 verschraubbar ist, obwohl selbstverständlich auch eine andere Anzahl von Schraubbohrungen, beispielsweise 4, denkbar ist. Seine leicht trapezförmige Form ist der des Tüllenbereichs 12 und somit der des Montagefensters 124 angepasst.

Die Fig. 5 zeigt das Gehäuse 1 aus Fig. 2 im Querschnitt durch seine erste Kabeleinführöffnung 125, in welche bereits ein Dichtungselement 2 eingefügt ist, der Übersichtlichkeit wegen aber ohne eingefügtes Kabel.

Weiterhin ist ein in Form einer Schraubschelle ausgeführtes Zugentlastungselement 3 dargestellt, das mit zwei dazugehörigen, in dieser Darstellung frei in der Luft stehenden Schrauben 32 an eine Innenseite 129 des Gehäuses 1 an dessen Tüllenbereich 12 anschraubbar sind, nämlich an einem dafür vorgesehenen Befestigungssteg 128, durch den das Gehäuse 1 an seiner Innenseite 129 die dafür notwendige Stärke aufweist.

Weiterhin besitzt das Gehäuse 1 am Rand seines Fensters 124 eine Flanschgummi-Dichtung 5 zur Abdichtung gegenüber dem mit den Gehäuseschrauben 42 mittels Gewindebohrungen 123 aufzuschraubenden Deckel 4 der vorangegangenen Darstellung.

Es ist anhand dieser Darstellungen leicht vorstellbar, dass das Gehäuse 1 mit seiner Öffnung 111 an dem Wanddurchbruch, insbesondere an einem standardisierten Panal-Cutout, einer Wand, insbesondere der Wand eines Schaltschranks, angeordnet und dort mit seinem Flansch 112 angeschraubt werden kann. Weiterhin kann das Kabel mit einem dazu passenden Dichtungselement 2 versehen werden, indem das Kabel durch den Schlitz 28 in die passende Durchgangsöffnung 21 des Dichtungselements 2 eingeführt wird. Der Deckel 4 des Gehäuses 1 kann geöffnet werden. Bei geöffnetem Deckel 4 kann das Dichtungselement 2 mit dem darin eingefügten Kabel in die Kabeleinführöffnung 125 des Gehäuses 1 seitlich eingeschoben werden. Daraufhin wird das Kabel im Schaltschrank in die gewünschte Position gebracht. Dies geschieht bei gleichzeitigem Hindurchbewegen des Kabels durch das Dichtungselement 2 auf die im Schaltschrank gewünschte Kabellänge. Nachdem das Kabel sich in seiner endgültigen Position befindet, wird es mittels des Zugentlastungselements 3, das eine Schraubschelle 31 und zwei dazugehörige Schrauben 32 handelt, an der Innenseite 129 des Gehäuses 1 und insbesondere an dem daran angeformten Befestigungssteg 128 durch Betätigung, nämlich Verschraubung, des Zugentlastungselements 3 durch das geöffnete Fenster 124 fixiert. Nun kann das Fenster 124 durch aufschrauben des Deckels 4 geschlossen werden, insbesondere bei gleichzeitigem Komprimieren des Dichtungselements 2 durch den Deckel 4 zur Erhöhung seiner Dichtigkeit gegenüber dem Kabel und dem Gehäuse 1 und dem Deckel 4.

## Bezugszeichenliste

| 1 | Gehäuse |
|---|---|
| 11 | Befestigungsbereich |
| 112 | Flansch |
| 113 | Durchgangsbohrungen |
| 12 | Tüllenbereich |
| 121 | Einführbereich |
| 122 | parallele Kanten |
| 123, 123' | Gewindebohrungen |
| 124 | Montagefenster |
| 125 | Kabeleinführöffnung |
| 126 | Nut |
| 128 | Befestigungssteg |
| | |
| 2 | Dichtungselement |
| 2 | Durchgangsöffnung |
| 24 | Begrenzungsfläche |
| 26 | Kragen |
| 28 | Schlitz |
| | |
| 3 | Zugentlastungselement |
| 31 | Schraubschelle |
| 32 | Schraube für Schraubschelle |
| | |
| 4 | Deckel |
| 43 | Schraubbohrung des Deckels |
| | |
| 5 | Flanschgummi-Dichtung |
| 6 | System (bekannt) |
| 61 | Anbaugehäuse |
| 62 | Tüllengehäuse/ Halbschalengehäuse |
| 621,622 | Halbschalen |
| 629 | Verriegelungszapfen |
| 63, 63' | Kabeleingänge |
| 64, 64' | Dichtelemente |
| 66 | Verbindungswand |
| 663 | abgerundete Ausnehmungen |
| 69 | Verriegelungsbügel |

## Patentansprüche

1. Vorrichtung zur Kabeldurchführung durch einen Wanddurchbruch eines Schaltschranks, umfassend:

   - Mindestens ein Dichtungselement (2),
   - Mindestens ein Zugentlastungselement (3), sowie
   - ein Gehäuse (1) zum Anbau an eine Wand des Schaltschranks im Bereich des in der Wand angeordneten Wanddurchbruchs, wobei das Gehäuse (1) Folgendes aufweist:

     - einen an einer ersten Seite des Gehäuses (1) angeordneten Befestigungsbereich (11) mit Befestigungsmitteln zur Befestigung des Gehäuses (1) an der Wand des Schaltschranks;
     - einen an einer zweiten Seite des Gehäuses (1) angeordneten Tüllenbereich (12) mit mindestens einer Kabeleinführöffnung (125) zur seitlichen Aufnahme des mindestens einen Dichtungselements (2) und eines durch das Dichtungselement (2) geführten Kabels;

   und wobei das Zugentlastungselement (3) an dem Gehäuse (1) befestigbar ist, um das Kabel am Gehäuse (1) zu fixieren; wobei

     - das mindestens eine Zugentlastungselement (3) an einer Innenseite (129) des Tüllenbereichs (12) angebracht ist und
     - das Gehäuse (1) ein Montagefenster (124) aufweist, durch welches das Zugentlastungselement (3) betätigbar ist, wobei
     - das mindestens eine Zugentlastungselement (3) mindestens eine Schraube (32) umfasst, durch die das Kabel mittels eines durch das Montagefenster (124) geführten Schraubendrehers an dem Tüllenbereich (12) des Gehäuses (1) fixierbar ist, wobei

   das Gehäuse (1) mit seinem Befestigungsbereich (11) und seinem Tüllenbereich (12) einteilig ausgeführt ist, wobei die Vorrichtung einen zum Montagefenster (124) passenden Deckel (4) aufweist, durch den das Montagefenster (124) durch Verschraubung verschließbar ist, wobei das Gehäuse (1) am Rand seines Fensters (124) eine Flanschgummi-Dichtung (5) aufweist, so dass der Deckel (4) in geschlossenen Zustand einerseits gegen die Flanschgummi-Dichtung (5) und andererseits gegen das dadurch leicht komprimierte Dichtungselement (2) und dieses auch gegen das hindurchgeführte Kabel besonders gut abdichtet,

**dadurch gekennzeichnet, dass**

die erste und die zweite Seite des Gehäuses (1) einander gegenüberliegen und dass, das Gehäuse (1) an einer der vorgenannten Innenseite gegenüberliegenden Seite seines Tüllenbereichs (12) das Montagefenster (124) aufweist.

2. Vorrichtung gemäß einem der vorstehenden Ansprüche, **dadurch gekennzeichnet, dass** die Befestigungsmittel einen Flansch (112) mit Durchgangsbohrungen (113) besitzen, mit welchem das Gehäuse (1) an der Wand anschraubbar ist.

3. Vorrichtung nach einem der vorstehenden Ansprüche, **dadurch gekennzeichnet, dass** die mindestens eine Kabeleinführöffnung (125) mit dem Montagefenster (124) verbunden ist und so einen an das Montagefenster (124) grenzenden Einführbereich (121) aufweist.

4. Vorrichtung nach Anspruch 3, **dadurch gekennzeichnet, dass** die Kabeleinführöffnung (125) zumindest an ihrem Einführbereich (121) zwei zueinander parallele Kanten (122) aufweist.

5. Vorrichtung nach Anspruch 4, **dadurch gekennzeichnet, dass** das Dichtungselement (2) form- und kraftschlüssig in die Kabeleinführöffnung (125) einfügbar ist und zumindest an einem Endbereich zwei parallele Seitenflächen (22) sowie eine rechtwinklig damit abschließende Begrenzungsfläche (24) aufweist.

6. Vorrichtung nach Anspruch 5, **dadurch gekennzeichnet, dass** das Dichtungselement (2) aus Richtung des Montagefensters (124) in die Kabeleinführöffnung (125) einschiebbar ist, so dass im eingeschobenen Zustand die parallelen Seitenflächen (22) des Dichtungselements (2) mit den parallelen Kanten (122) der Kabeleinführöffnung (125) in mechanischem Kontakt stehen.

7. Vorrichtung nach Anspruch 6, **dadurch gekennzeichnet, dass** die Kabeleinführöffnung (125) an ihrem Rand eine Nut (126) aufweist und dass das Dichtungselement (2) einen dazu passenden Kragen (26) aufweist, der formschlüssig in die Nut (126) einfügbar ist.

8. Vorrichtung nach einem der Ansprüche 5 bis 7, **dadurch gekennzeichnet, dass** das Dichtungselement (2) eine Durchgangsöffnung (21) zur Aufnahme des Kabels aufweist, dass das Dichtungselement (2) einen seitlichen Schlitz (28) zum Einfügen des Kabels in die Durchgangsöffnung (21) des Dichtungselements (2) aufweist, dass das Dichtungselement (2) zusammen mit dem eingefügten Kabel in die Kabelöffnung (125) einfügbar ist, und dass die Länge des Dichtungselements (2) die Länge der Kabeleinführöffnung (125) des Gehäuses (1) geringfügig überschreitet, wodurch das eingefügte Dichtungselement (2) durch Verschließen des Fensters (124) mittels des Deckels (4) komprimierbar ist, um im verschlossenen Zustand gegenüber dem Gehäuse (1) und gegenüber dem Kabel eine gegenüber dem unverschlossenen Zustand erhöhte Dichtigkeit zu erreichen.

9. Verfahren zur Kabeldurchführung durch einen Wanddurchbruch mittels einer Vorrichtung nach Anspruch 1 mit folgenden Schritten:

a.) Auswahl mindestens eines für den Querschnitt des einzufügenden Kabels geeigneten Dichtungselements (2) und Einfügen des Kabels in das Dichtungselement (2);
b.) Öffnen der Fensters (124) des an einer Wand eines Schaltschranks befestigten Gehäuses (1) durch Abschrauben des Deckels (4);
c.) seitliches Einschieben des mindestens einen Dichtungselements (2) mit dem darin eingefügten Kabel in eine Kabeleinführöffnung (125) des Gehäuses (1);
d.) Positionieren des Kabels im Schaltschrank in die gewünschte Position bei gleichzeitigem Hindurchbewegen des Kabels durch das Dichtungselement (2) auf die im Schaltschrank gewünschte Kabellänge;
f.) Fixieren des Kabels mittels des Zugentlastungselements (3) an der Innenseite (129) des Gehäuses (1) durch Betätigung des Zugentlastungselements (3) durch das geöffnete Fenster (124), indem das Kabel zwischen der Innenseite (129) des Gehäuses (1) und dem Zugentlastungselement (3) durch Anschrauben des Zugentlastungselements (3) an das Gehäuse (1) mittels eines durch das geöffnete Fenster (124) geführten Schraubendrehers festgeklemmt wird;
g.) Schließen des Fensters (124) und gleichzeitiges Komprimieren des Dichtungselements (2) zur Erhöhung seiner Dichtigkeit gegenüber dem Kabel und dem Gehäuse (1) und gleichzeitiges Abdichten des Gehäuses (1) durch Anschrauben des Deckels (4) über die Flanschgummi-Dichtung (5).

**Claims**

1. Apparatus for leading cables through a wall aperture of a switchgear cabinet, comprising:

- at least one seal element (2),

- at least one strain-relief element (3), and
- a housing (1) for attachment to a wall of the switchgear cabinet in the region of the wall aperture arranged in the wall, wherein the housing (1) has the following:

- a fastening region (11) which is arranged on a first side of the housing (1) and has fastening means for fastening of the housing (1) to the wall of the switchgear cabinet;
- a sleeve region (12) which is arranged on a second side of the housing (1) and has at least one cable insertion opening (125), the latter serving for laterally receiving the at least one seal element (2) and a cable which is led through the seal element (2);

and wherein the strain-relief element (3) is fastenable to the housing (1) in order to fix the cable to the housing (1); wherein

- the at least one strain-relief element (3) is fitted to an inner side (129) of the sleeve region (12), and
- the housing (1) has a fitting window (124) through which the strain-relief element (3) is actuatable, wherein
- the at least one strain-relief element (3) comprises at least one screw (32) by way of which the cable is fixable to the sleeve region (12) of the housing (1) by means of a screwdriver passed through the fitting window (124),

wherein the housing (1), with its fastening region (11) and its sleeve region (12), is formed in one piece, wherein the apparatus has a cover (4) which matches the fitting window (124) and by way of which the fitting window (124) is able to be closed off by screwing, wherein, at the edge of its window (124), the housing (1) has a flange rubber seal (5) such that the cover (4), in a closed state, particularly effectively seals off firstly with respect to the flange rubber seal (5) and secondly with respect to the consequently slightly compressed seal element (2) and the latter also with respect to the cable led through, **characterized in that**
the first and second sides of the housing (1) are situated opposite one another, and **in that** the housing (1) has the fitting window (124) on a side of its sleeve region (12) that is situated opposite the aforementioned inner side.

2. Apparatus according to one of the preceding claims, **characterized in that** the fastening means has a flange (112) with passage bores (113), by way of which flange the housing (1) is able to be screwed to the wall.

3. Apparatus according to either of the preceding claims, **characterized in that** the at least one cable insertion opening (125) is connected to the fitting window and, in this way, has an insertion region (121) which adjoins the fitting window (124).

4. Apparatus according to Claim 3, **characterized in that** the cable insertion opening (125), at least at its insertion region (121), has two edges (122) which are parallel to one another.

5. Apparatus according to Claim 4, **characterized in that** the seal element (2) is introducible in a form- and force-fitting manner into the cable insertion opening (125) and, at least at one end region, has two parallel side surfaces (22) and a delimitation surface (24) which terminates at a right angle thereto.

6. Apparatus according to Claim 5, **characterized in that** the seal element (2) is able to be pushed into the cable insertion opening (125) from the direction of the fitting window (124) such that, in the pushed-in state, the parallel side surfaces (22) of the seal element (2) are in mechanical contact with the parallel edges (122) of the cable insertion opening (125).

7. Apparatus according to Claim 6, **characterized in that** the cable insertion opening (125) has a groove (126) at its edge, and **in that** the seal element (2) has a collar (26) matching it that introducible in a form-fitting manner into the groove (126).

8. Apparatus according to one of Claims 5 to 7, **characterized in that** the seal element (2) has a passage opening (21) for receiving the cable, **in that** the seal element (2) has a lateral slot (28) for introduction of the cable into the passage opening (21) of the seal element (2), **in that** the seal element (2) is introducible together with the introduced cable into the cable opening (125), and **in that** the length of the seal element (2) slightly exceeds the length of the cable insertion opening (125) of the housing (1), whereby the introduced seal element (2) is compressible by way of closure of the window (124) by means of the cover (4) so as, in the closed-off state, to achieve, with respect to the housing (1) and with respect to the cable, sealing action which is increased in comparison with the non-closed-off state.

9. Method for leading cables through a wall aperture by means of an apparatus according to Claim 1, comprising the following steps:

a.) selecting at least one seal element (2) which is suitable for the cross section of the cable to be introduced and introducing the cable into the seal element (2);

b.) opening the window (124) of the housing (1) fastened to a wall of a switchgear cabinet by screwing off the cover (4);

c.) laterally pushing the at least one seal element (2), with the cable introduced therein, into a cable insertion opening (125) of the housing (1) ;

d.) positioning the cable in the switchgear cabinet in the desired position while simultaneously moving the cable through the seal element (2) to attain the desired cable length in the switchgear cabinet;

f.) fixing the cable by means of the strain-relief element (3) to the inner side (129) of the housing (1) by actuation of the strain-relief element (3) through the open window (124), in that the cable is clamped firmly between the inner side (129) of the housing (1) and the strain-relief element (3) by screwing of the strain-relief element (3) onto the housing (1) by means of a screwdriver passed through the open window (124);

g.) closing the window (124) and simultaneously compressing the seal element (2) for the purpose of increasing the sealing action thereof with respect to the cable and to the housing (1) and simultaneously sealing off the housing (1) by screwing on the cover (4) via the flange rubber seal (5).

## Revendications

1. Dispositif pour le passage de câbles à travers une percée de paroi d'une armoire électrique, comprenant :

   - au moins un élément d'étanchéité (2),
   - au moins un élément de décharge de traction (3), ainsi que
   - un boîtier (1) destiné à être monté sur une paroi de l'armoire électrique dans la zone de la percée de paroi agencée dans la paroi, le boîtier (1) présentant les éléments suivants :

     - une zone de fixation (11) agencée sur un premier côté du boîtier (1) avec des moyens de fixation pour fixer le boîtier (1) à la paroi de l'armoire électrique ;
     - une zone de douille (12) agencée sur un deuxième côté du boîtier (1) avec au moins une ouverture d'introduction de câble (125) pour recevoir latéralement l'au moins un élément d'étanchéité (2) et un câble guidé à travers l'élément d'étanchéité (2) ;

   et l'élément de décharge de traction (3) pouvant être fixé au boîtier (1) afin de fixer le câble au boîtier (1) ;

   - l'au moins un élément de décharge de traction (3) étant disposé sur un côté intérieur (129) de la zone de douille (12) ; et
   - le boîtier (1) présentant une fenêtre de montage (124) à travers laquelle l'élément de décharge de traction (3) peut être actionné,
   - l'au moins un élément de décharge de traction (3) comprenant au moins une vis (32) à l'aide de laquelle le câble peut être fixé sur la zone de douille (12) du boîtier (1) au moyen d'un tournevis guidé à travers la fenêtre de montage (124),

   le boîtier (1) étant réalisé d'une seule pièce avec sa zone de fixation (11) et sa zone de douille (12),
   le dispositif présentant un couvercle (4) adapté à la fenêtre de montage (124), à l'aide duquel la fenêtre de montage (124) peut être fermée par vissage, le boîtier (1) présentant sur le bord de sa fenêtre (124) un joint d'étanchéité en caoutchouc à bride (5), de telle sorte que le couvercle (4), à l'état fermé, assure particulièrement bien l'étanchéité d'une part contre le joint d'étanchéité en caoutchouc à bride (5) et d'autre part contre l'élément d'étanchéité (2) légèrement comprimé par celui-ci et celui-ci également contre le câble qui le traverse,
   **caractérisé en ce que**
   le premier et le deuxième côté du boîtier (1) sont opposés l'un à l'autre et **en ce que** le boîtier (1) présente la fenêtre de montage (124) sur un côté de sa zone de douille (12) opposé au côté intérieur susmentionné.

2. Dispositif selon l'une quelconque des revendications précédentes, **caractérisé en ce que** les moyens de fixation comportent une bride (112) avec des alésages traversants (113) avec lesquels le boîtier (1) peut être vissé sur la paroi.

3. Dispositif selon l'une quelconque des revendications précédentes, **caractérisé en ce que** l'au moins une ouverture d'introduction de câble (125) est reliée à la fenêtre de montage (124) et présente ainsi une zone d'introduction (121) adjacente à la fenêtre de montage (124).

4. Dispositif selon la revendication 3, **caractérisé en ce que** l'ouverture d'introduction de câble (125) présente, au moins au niveau de sa zone d'introduction (121), deux bords (122) parallèles entre eux.

5. Dispositif selon la revendication 4, **caractérisé en ce que** l'élément d'étanchéité (2) peut être inséré dans l'ouverture d'introduction de câble (125) par complémentarité de forme et de force et présente, au moins au niveau d'une zone d'extrémité, deux surfaces latérales parallèles (22) ainsi qu'une surface de délimitation (24) se terminant à angle droit avec celles-ci .

**6.** Dispositif selon la revendication 5, **caractérisé en ce que** l'élément d'étanchéité (2) peut être inséré dans l'ouverture d'introduction de câble (125) depuis la direction de la fenêtre de montage (124), de telle sorte qu'à l'état inséré, les surfaces latérales parallèles (22) de l'élément d'étanchéité (2) sont en contact mécanique avec les bords parallèles (122) de l'ouverture d'introduction de câble (125).

**7.** Dispositif selon la revendication 6, **caractérisé en ce que** l'ouverture d'introduction de câble (125) présente une rainure (126) sur son bord et **en ce que** l'élément d'étanchéité (2) présente une collerette (26) adaptée à celle-ci, qui peut être insérée par complémentarité de forme dans la rainure (126).

**8.** Dispositif selon l'une quelconque des revendications 5 à 7, **caractérisé en ce que** l'élément d'étanchéité (2) présente une ouverture de passage (21) pour recevoir le câble, **en ce que** l'élément d'étanchéité (2) présente une fente latérale (28) pour insérer le câble dans l'ouverture de passage (21) de l'élément d'étanchéité (2), **en ce que** l'élément d'étanchéité (2) peut être inséré dans l'ouverture pour câble (125) conjointement avec le câble inséré, et **en ce que** la longueur de l'élément d'étanchéité (2) dépasse légèrement la longueur de l'ouverture d'introduction de câble (125) du boîtier (1), moyennant quoi l'élément d'étanchéité inséré (2) peut être comprimé au moyen du couvercle (4) par fermeture de la fenêtre (124) afin d'obtenir, à l'état fermé, une étanchéité accrue par rapport à l'état non fermé par rapport au boîtier (1) et par rapport au câble.

**9.** Procédé pour le passage de câbles à travers une percée de paroi au moyen d'un dispositif selon la revendication 1, avec les étapes suivantes :

a.) la sélection d'au moins un élément d'étanchéité (2) approprié pour la section transversale du câble à insérer et l'insertion du câble dans l'élément d'étanchéité (2) ;
b.) l'ouverture de la fenêtre (124) du boîtier (1) fixé sur une paroi d'une armoire électrique par dévissage du couvercle (4) ;
c.) l'insertion latérale de l'au moins un élément d'étanchéité (2) avec le câble inséré dans celui-ci dans une ouverture d'introduction de câble (125) du boîtier (1) ;
d.) le positionnement du câble dans l'armoire électrique dans la position souhaitée en faisant simultanément passer le câble à travers l'élément d'étanchéité (2) sur la longueur de câble souhaitée dans l'armoire électrique ;
f.) la fixation du câble au moyen de l'élément de décharge de traction (3) sur le côté intérieur (129) du boîtier (1) par actionnement de l'élément de décharge de traction (3) à travers la fenêtre ouverte (124), en fixant le câble entre le côté intérieur (129) du boîtier (1) et l'élément de décharge de traction (3) par vissage de l'élément de décharge de traction (3) sur le boîtier (1) au moyen d'un tournevis guidé à travers la fenêtre ouverte (124) ;
g.) la fermeture de la fenêtre (124) et la compression simultanée de l'élément d'étanchéité (2) pour augmenter son étanchéité par rapport au câble et au boîtier (1) et l'étanchéification simultanée du boîtier (1) par vissage du couvercle (4) par l'intermédiaire du joint d'étanchéité en caoutchouc à bride (5).

6

64′    64    63    63′    622     62

621

61      629     69

**Fig.1a**

60

66

663

31

622

621

64

64′

**Fig.1b**

STAND DER TECHNIK

Fig.2

Fig.3

Fig.4

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014215058 A1
- US 20160033722 A1
- DE 102013007909 A1
- WO 2012017000 A2
- DE 202012101639 U1
- JP 2013005636 A
- DE 102011103351 B3
- US 2014252722 A1
- DE 202010008423 U1